(19) Europäisches Patentamt
European Patent Office
Office européen des brevets

(11) **EP 4 407 704 A1**

(12) **EUROPEAN PATENT APPLICATION**

(43) Date of publication:
**31.07.2024 Bulletin 2024/31**

(21) Application number: **23195694.7**

(22) Date of filing: **06.09.2023**

(51) International Patent Classification (IPC):
*H01M 4/13* (2010.01)    *H01M 4/134* (2010.01)
*H01M 4/136* (2010.01)    *H01M 4/38* (2006.01)
*H01M 4/48* (2010.01)    *H01M 4/58* (2010.01)
*H01M 4/62* (2006.01)

(52) Cooperative Patent Classification (CPC):
**H01M 4/13; H01M 4/133; H01M 4/134;**
**H01M 4/136; H01M 4/1395; H01M 4/366;**
**H01M 4/386; H01M 4/483; H01M 4/58;**
**H01M 4/587; H01M 4/62; H01M 4/622;**
H01M 10/0525; H01M 2004/021; H01M 2004/027;

(Cont.)

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **09.11.2022 KR 20220148485**

(71) Applicant: **SK On Co., Ltd.**
**Seoul 03161 (KR)**

(72) Inventor: **JEONG, Kwang Ho**
**34124 Daejeon (KR)**

(74) Representative: **Stolmár & Partner**
**Patentanwälte PartG mbB**
**Blumenstraße 17**
**80331 München (DE)**

(54) **ANODE FOR SECONDARY BATTERY AND LITHIUM SECONDARY BATTERY INCLUDING THE SAME**

(57)    An anode for a secondary battery including an anode current collector and an anode mixture layer disposed on at least one surface of the anode current collector, wherein the anode mixture layer includes a silicon-based active material, an acrylate-based binder, and a rubber-based binder, wherein the rubber-based binder includes an acrylate-based monomer, and wherein a content ratio of the acrylate-based monomer in the rubber-based binder is greater than 4 mol% and less than 80 mol% is disclosed.

<u>100</u>

FIG. 1

EP 4 407 704 A1

(52) Cooperative Patent Classification (CPC): (Cont.)
Y02E 60/10

**Description**

**BACKGROUND**

**1. FIELD**

The technology and implementations disclosed in this patent document generally relate to an anode for a secondary battery and a lithium secondary battery including the same.

**2. DESCRIPTION OF THE RELATED ART**

Recently, a large amount of research has been conducted into an electric vehicle (EV) capable of replacing a vehicle using fossil fuels, such as a gasoline vehicle, a diesel vehicle, or the like, which may be one of main causes of air pollution. Accordingly, the need for a lithium secondary battery having high energy density is increasing, and development and research of a high-capacity anode for this purpose are also being actively conducted.

In order to implement a secondary battery having high capacity and high energy density, a development of applying a silicon-based active material having discharge capacity, higher than that of graphite, to an anode for a secondary battery is being actively developed. When a silicon-based active material having such high discharge capacity is applied, together with a carbon-based active material such as graphite or the like, a loading weight (LW) of an anode active material layer may also be lowered, thereby further increasing energy density.

However, since the silicon-based active material has a volumetric expansion rate, higher than that of the carbon-based active material, it is difficult to secure performance such as lifespan characteristics, battery resistance characteristics, or the like, in an excellent level, while suppressing volumetric expansion of an anode including the silicon-based active material. Accordingly, there is a need to develop an anode for a secondary battery having excellent capacity characteristics, excellent lifespan characteristics, excellent resistance characteristics, and the like.

**SUMMARY**

The disclosed technology is implemented in some embodiments to provide an anode for a secondary battery capable of suppressing volumetric expansion of a silicon-based active material and ensuring excellent battery resistance characteristics at the same time.

According to another aspect of the disclosure of this patent document, a lithium secondary battery having excellent capacity characteristics, excellent resistance characteristics, excellent lifespan characteristics, and the like may be provided.

In some embodiments of the disclosed technology, an anode for a secondary battery includes an anode current collector and an anode mixture layer disposed on at least one surface of the anode current collector, wherein the anode mixture layer includes a silicon-based active material, an acrylate-based binder, and a rubber-based binder, wherein the rubber-based binder includes an acrylate-based monomer, and wherein a content ratio of the acrylate-based monomer in the rubber-based binder is greater than 4 mol% and less than 80 mol%.

According to an embodiment, the content ratio of the acrylate-based monomer in the rubber-based binder may be 10 to 50 mol%.

According to an embodiment, in the anode for a secondary battery, an $R_B$ value according to Equation 1 below may be greater than 1.33 and less than 20:

$$[\text{Equation 1}]$$
$$R_B = C_A/C_R$$

in Equation 1, $R_B$ is a weight-based content ratio of the acrylate-based binder and the rubber-based binder, $C_A$ is a content (wt%) of the acrylate-based binder in the anode mixture layer, and $C_R$ is a content (wt%) of the rubber-based binder in the anode mixture layer.

According to an embodiment, in the anode for a secondary battery, the $R_B$ value may be 1.67 to 10.

According to an embodiment, the acrylate-based binder may include polyacrylic acid (PAA), a polyacrylic acid-based copolymer, or a combination thereof.

According to an embodiment, the polyacrylic acid-based copolymer may be a copolymer of polyacrylic acid (PAA) and any one selected from polyacrylamide, polyimide (PI), polyvinyl alcohol (PVA), and combinations thereof.

According to an embodiment, the rubber-based binder may include a styrene-butadiene rubber (SBR).

According to an embodiment, the acrylate-based monomer may be any one selected from alkyl acrylate having an alkyl group having 1 to 10 carbon atoms; alkyl methacrylate having an alkyl group of 1 to 10 carbon atoms; and combinations thereof.

According to an embodiment, the silicon-based active material may include at least one selected from $SiO_x$ ($0 < x < 2$), metal-doped $SiO_x$ ($0 < x < 2$), SiC, and Si.

According to an embodiment, in the anode for a secondary battery, adhesive force between the anode current collector and the anode mixture layer may be 0.25 N/18 mm or more.

According to an embodiment, in the anode for a secondary battery, a $V_D$ value according to Equation 2 below may be less than 35%:

[Equation 2]

$$V_D = (T_2 - T_1) / (T_1 - T_0) \times 100$$

in Equation 2, $V_D$ is a volumetric expansion rate (%) of the anode, $T_0$ is a thickness of the anode current collector, $T_1$ is a thickness of the anode before charging the secondary battery (SOC 0), and $T_2$ is a thickness of the anode after charging the secondary battery (SOC 100).

A lithium secondary battery according to an embodiment of the disclosure of this patent document may include the anode for a secondary battery according to any one of the above-described embodiments.

According to an embodiment, in the lithium secondary battery, a DC-IR resistance value may be 1.05 mΩ or less.

## BRIEF DESCRIPTION OF DRAWINGS

Certain aspects, features, and advantages of the disclosed technology may be illustrated by the following detailed description with reference to the accompanying drawings.

FIG. 1 is a schematic cross-sectional view illustrating a structure of an anode for a secondary battery according to an embodiment.

FIG. 2 is a schematic cross-sectional view illustrating a structure of an anode for a secondary battery according to an embodiment.

## DETAILED DESCRIPTION

Hereinafter, the disclosure of this patent document will be described in detail with reference to the accompanying drawings. However, this is only illustrative, and the disclosure of this patent document is not limited to the specific embodiments described as examples. In the present specification, an 'acrylate-based compound' may be a compound such as a monomer or a polymer thereof having an acrylate group represented by '$H_2C=CH-COO-$,' and specifically means a polyacrylate-based compound. That is, an 'acrylate-based monomer' refers to a monomer capable of forming a polyacrylate-based polymer, and an 'acrylate-based binder' may be a polyacrylate-based binder, and examples thereof may include polyacrylic acid (PAA).

As described above, a silicon-based active material may be included for high capacity characteristics of an anode for a secondary battery, but an anode design capable of controlling a relatively high volumetric expansion rate of the silicon-based active material may be required. In this regard, an acrylate-based binder such as polyacrylic acid (PAA) may induce physical/chemical cross-linking between polymer layers, thereby effectively suppressing the volumetric expansion of the silicon-based active material, as compared to conventional carboxymethylcellulose (CMC)/styrene-butadiene rubber (SBR)-based binders. However, in the acrylate-based binder, most functional groups (acrylate groups) having excellent affinity with an electrolytic solution may disappear during a drying process or an additional crosslinking process for forming an anode mixture layer. Therefore, affinity between the electrolytic solution and the electrode may be reduced to decrease electrolyte uptake, and resistance of a finally manufactured battery may also increase.

A rubber-based binder such as a styrene-butadiene rubber (SBR) may be used to improve adhesive force between an anode current collector and an anode mixture layer, and when the rubber-based binder includes an acrylate-based monomer having a high affinity for an electrolytic solution, it may absorb the electrolytic solution excellently, thereby reducing resistance of a finally manufactured battery.

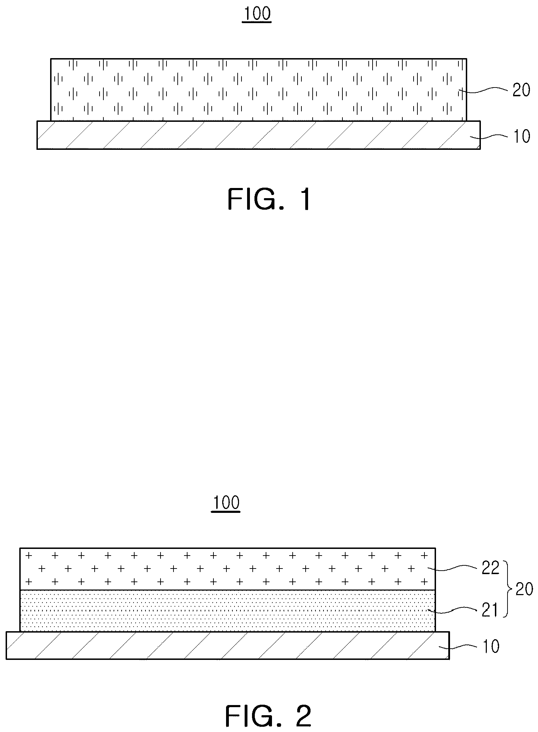

Therefore, the inventors confirmed that, when (1) an acrylate-based binder and (2) a rubber-based binder including an acrylate-based monomer were applied as binders for preparing an anode for a secondary battery, a volumetric expansion rate of an anode containing a silicon-based active material may be effectively suppressed, and adhesive force between an anode current collector and an anode mixture layer and resistance characteristics of a finally manufactured battery may also be effectively improved, at the same time. Referring to FIG. 1, implementations of the disclosure of this patent document may be described in detail below.

FIG. 1 is a schematic cross-sectional view illustrating a structure of an anode for a secondary battery according to an embodiment.

FIG. 2 is a schematic cross-sectional view illustrating a structure of an anode for a secondary battery according to an embodiment.

## Anode 100 for Secondary Battery

An anode 100 for a secondary battery according to an embodiment may include an anode current collector 10 and an anode mixture layer 20 disposed on at least one surface of the anode current collector, wherein the anode mixture layer may include a silicon-based active material, an acrylate-based binder, and a rubber-based binder. The rubber-based binder may include an acrylate-based monomer, and a content ratio of the acrylate-based monomer in the rubber-based binder may be greater than 4 mol% and less than 80 mol%.

The anode 100 for a secondary battery may include an anode mixture layer 20 disposed on at least one surface of an anode current collector 10 (see FIG. 1). In this case, the anode mixture layer may include a first anode mixture layer 21 and a second anode mixture layer 22, as a multilayer structure (see FIG. 2). The first anode mixture layer 21 may be an active material layer (a lower layer) on one surface adjacent to the anode current collector, and the second anode mixture layer 22 may be an active material layer (an upper layer) disposed on the first anode mixture layer, relatively spaced apart from the anode current collector, and adjacent to the electrolyte. When the anode mixture layer has a multi-layered structure including the first anode mixture layer 21 and the second anode mixture layer 22, the first anode mixture layer 21 and the second anode mixture layer 22 may satisfy characteristics of the anode mixture layer described below, respectively.

The anode mixture layer 20 may include a silicon-based active material, an acrylate-based binder, and a rubber-based binder, and the rubber-based binder may include an acrylate-based monomer. As described above, when the anode for a secondary battery including a silicon-based active material includes (1) an acrylate-based binder and (2) a rubber-based binder including an acrylate-based monomer, volumetric expansion of the silicon-based active material during charge/discharge of the battery may be suppressed, and adhesive force of the anode and resistance characteristics of a finally manufactured battery may also be effectively improved, at the same time.

A content ratio of the acrylate-based monomer in the rubber-based binder may be greater than 4 mol% and less than 80 mol%. Specifically, the content ratio of the acrylate-based monomer in the rubber-based binder may be 10 to 50 mol%. When a content of the acrylate-based monomer in the rubber-based binder is too small, due to the small number of acrylate groups having high affinity with the electrolyte, it is difficult to substantially improve resistance characteristics of the battery through improvement in absorption amount of the electrolyte. In addition, when a content of the acrylate-based monomer in the rubber-based binder is too large, an effect of improving adhesive force of the anode through addition of the rubber-based binder may be substantially insufficient, and an absorption amount of the electrolyte by the binder may be too large to increase swelling of the anode. Therefore, when a content range of the acrylate-based monomer in the rubber-based binder is properly adjusted within the above-described range, it is possible to secure an excellent level of adhesive force of the anode and a volumetric expansion rate, along with an effect of improving resistance characteristics of the battery through improvement in absorption amount of the electrolyte.

The anode 100 for a secondary battery may have an $R_B$ value according to Equation 1 below greater than 1.33 and less than 20:

$$[\text{Equation 1}]$$

$$R_B = C_A / C_R$$

in Equation 1, $R_B$ is a weight-based content ratio of the acrylate-based binder and the rubber-based binder, $C_A$ is a content (wt%) of the acrylate-based binder in the anode mixture layer, and $C_R$ is a content (wt%) of the rubber-based binder in the anode mixture layer.

The anode 100 for a secondary battery may have the $R_B$ value of 1.67 to 10. Specifically, the anode 100 for a secondary battery may have the $R_B$ value of 1.67 or more, 2 or more, 2.86 or more, or 4 or more, or 10 or less.

Within a range in which the $R_B$ value satisfies the above-mentioned condition, the $C_A$ value of the anode for a secondary battery may be 1 or more or 2 or more, and may be 10 or less, 5 or less, or 3 or less. In addition, within a range in which the $R_B$ value satisfies the above-described conditions, the anode for a secondary battery may have the $C_R$ value of 0.1 or more, 0.5 or more, 0.7 or more, 1 or more, or 2 or more, or 5 or less, or 3 or less.

When a content of the acrylate-based binder is excessively greater than a content of the rubber-based binder, an effect of improving adhesive force of the anode and an effect of improving resistance characteristics of the battery may be relatively reduced, and when the content of the rubber-based binder is excessively greater than the content of the acrylate-based binder, it is substantially difficult to suppress volumetric expansion of the anode. Therefore, when the contents of the acrylate-based binder and the rubber-based binder are also appropriately adjusted in the anode 100 for a secondary battery, an effect of suppressing a volumetric expansion rate of the anode, an effect of improving resistance characteristics of the battery, or the like may be secured in a higher level.

The acrylate-based binder may be a polymer binder containing an acrylate group, and may include polyacrylic acid (PAA). Specifically, the acrylate-based binder may include polyacrylic acid (PAA), a polyacrylic acid-based copolymer, or a combination thereof, and the polyacrylic acid-based copolymer may be a copolymer of polyacrylic acid (PAA) and any one selected from polyacrylamide, polyimide (PI), polyvinyl alcohol (PVA), and combinations thereof. When the above-described type of polymer binder is used as the acrylate-based binder, volumetric expansion of the silicon-based active material may be effectively suppressed.

The acrylate-based binder may further include polyacrylamide, polyimide (PI), polyvinyl alcohol (PVA), or the like, as an additional binder, in addition to polyacrylic acid (PAA), a polyacrylic acid-based copolymer, or a combination thereof.

The rubber-based binder may include a styrene-butadiene rubber (SBR). Specifically, the rubber-based binder may include a styrene-butadiene rubber (SBR) modified to include an acrylate-based monomer, and the modified styrene-butadiene rubber (SBR) may be a copolymerized form of a styrene-based monomer, a butadiene-based monomer, and an acrylate-based monomer. When the above-described type of polymer compound is applied as the rubber-based binder, adhesive force between the anode current collector and the anode mixture layer, and resistance characteristics of the battery may be effectively improved.

The acrylate-based monomer may be any one selected from alkyl acrylate having an alkyl group having 1 to 10 carbon atoms; alkyl methacrylate having an alkyl group of 1 to 10 carbon atoms; and combinations thereof. Specifically, the alkyl acrylate may have an alkyl group having 1 to 3 carbon atoms, and the alkyl methacrylate may have an alkyl group having 1 to 3 carbon atoms. More specifically, the alkyl acrylate may be any one selected from methyl acrylate, ethyl acrylate, propyl acrylate, and combinations thereof, and the alkyl methacrylate may be any one selected from methyl methacrylate, ethyl methacrylate, propyl methacrylate, and combinations thereof. When the acrylate-based monomer is the above-mentioned type, affinity with the electrolytic solution and an absorption amount of the electrolytic solution may be excellent, such that the resistance characteristics of the battery may be improved to a more excellent level.

The silicon-based active material may include at least one selected from $SiO_x$ (0 < x < 2), metal-doped $SiO_x$ (0 < x < 2), SiC, and Si. The metal may include lithium and/or magnesium, and the metal-doped $SiO_x$ (0 < x < 2) may include metal silicate. A content of the silicon-based active material in the anode mixture layer 20 may be 0.1 to 20% by weight. Specifically, the content of the silicon-based active material in the anode mixture layer 20 may be 1% by weight or more, 5% by weight or more, or 7% by weight or more, and 20% by weight or less, 15% by weight or less, or 13% by weight or less.

The anode mixture layer 20 may further include a carbon-based active material. The carbon-based active material may be at least one selected from artificial graphite, natural graphite, hard carbon, soft carbon, a carbon black, an acetylene black, a ketjen black, a super P, graphene, and fibrous carbon. When the anode mixture layer 20 further includes a carbon-based active material, a content of the carbon-based active material in the anode mixture layer may be 80 to 99% by weight or 85 to 95% by weight, as an example.

The anode mixture layer 20 may further include a conductive material. The conductive material may impart conductivity to the electrode, may be used for maintaining the structure of the electrode, and may have conductivity without causing side reactions with other elements of the secondary battery. For example, the conductive material may include graphite such as natural graphite, artificial graphite, or the like; a carbon-based material such as a carbon black, an acetylene black, a ketjen black, a channel black, a furnace black, a lamp black, a thermal black, a carbon fiber, a carbon nanotube (CNT), or the like; a metal powder or a metal fiber such as copper, nickel, aluminum, silver, or the like; a conductive whisker such as zinc oxide, potassium titanate, or the like; a conductive metal oxide such as titanium oxide or the like; a conductive polymer such as a polyphenylene derivative or the like; or the like, alone or in combination of two or more.

Specifically, the conductive material may include a single-walled carbon nanotube (SWCNT) or a multi-walled carbon nanotube (MWCNT) alone or in combination of two or more. The carbon nanotube (CNT) may have higher electron mobility than carbon black, which may be a conventional conductive material, may realize high energy density with a small amount, may have high strength or the like due to their stable structure, and may substantially alleviate volumetric expansion of the silicon-based active material. Therefore, when the conductive material includes the carbon nanotubes (CNT) such as a single-walled carbon nanotube (SWCNT), energy density, lifespan characteristics, resistance characteristics, or the like of the electrode may be more excellent.

When the anode mixture layer 20 further includes a conductive material, a content of the conductive material in the anode mixture layer may be 0.01 to 10% by weight, 0.1 to 5% by weight, or 0.3 to 1% by weight.

The anode mixture layer 20 may further include an additional binder within a range that does not impair effects of the above-described acrylate-based monomer and effects of the above-described rubber-based binder. The additional binder is not particularly limited as long as it is a compound that serves to well attach components in the anode mixture layer to each other and to well attach the anode mixture layer to the anode current collector, and, for example, as a rubber-based binder that does not contain an acrylate-based monomer, may be a rubber-based binder such as a styrene-butadiene rubber (SBR), a fluorine-based rubber, an ethylene propylene rubber, a butadiene rubber, an isoprene rubber, a silane-based rubber, or the like; a cellulosic binder such as carboxymethylcellulose (CMC), hydroxypropylmethylcellulose, methylcellulose, an alkali metal salt thereof, or the like; and combinations thereof.

A loading weight (LW) of the anode mixture layer may be 0.1 to 15.0 mg/cm$^2$. The loading weight (LW) means that an amount of the anode mixture layer disposed on the anode current collector, e.g., a layer including an active material, a binder, a conductive material, and the like may be formed on the anode current collector in terms of weight per area. In this case, the area may be based on an area of the anode current collector, and the weight may be based on a weight of the formed anode mixture layer.

Non-limiting examples of the anode current collector 10 may include a copper foil, a nickel foil, a stainless steel foil, a titanium foil, a nickel foam, a copper foam, a polymer substrate coated with a conductive metal, or the like. A thickness of the anode current collector may be 10 to 50 μm, for example, but is not limited thereto.

A method of manufacturing the anode for a secondary battery of the disclosure of this patent document is not particularly limited, and the anode may be manufactured, for example, by applying an anode slurry containing a solvent, a silicon-based active material, an acrylate-based binder, and a rubber-based binder onto the anode current collector 10 by a process such as bar coating, casting, spraying, or the like, and drying the same at 70 to 120°C to form an anode mixture layer. When the anode mixture layer of the anode for a secondary battery has a multilayer structure including a first anode mixture layer and a second anode mixture layer, the anode mixture layer may be manufactured by forming the first anode mixture layer according to the above-described method, and then forming the second anode mixture layer on the first anode mixture layer in the same manner to prepare the anode, or by simultaneously coating and drying a first anode slurry and a second anode slurry.

The coating process may be performed by a process such as gravure coating, slot die coating, multi-layer simultaneous die coating, imprinting, doctor blade coating, dip coating, bar coating, casting, or the like, but is not limited thereto.

The solvent, for example, may use dimethyl sulfoxide (DMSO), isopropyl alcohol, N-methyl pyrrolidone (NMP), acetone, water, or the like, and a usage amount of the solvent may be sufficient to dissolve or disperse an active material, a conductive material, and a binder in consideration of a coating thickness and manufacturing yield of a composition for forming the anode mixture layer, and then have a viscosity that may indicate excellent thickness uniformity when applying for formation of the anode mixture layer.

In the anode 100 for a secondary battery, adhesive force between the anode current collector 10 and the anode mixture layer 20 may be 0.25 N/18 mm or more. Specifically, the anode 100 for a secondary battery may have adhesive force between the anode current collector 10 and the anode mixture layer 20 of 0.29 N/18 mm or more, or 0.31 N/18 mm or more, and 0.5 N/18 mm or less, or 0.4 N/18 mm or less. The adhesive force between the anode current collector and the anode mixture layer may be measured by performing a 90-degree peel test using a peel tester. Specifically, the anode may be cut into a size of 18 mm in width and 150 mm in length, a tape having a width of 18 mm may be attached to the anode current collector, and may be sufficiently adhered thereto using a roller, the anode mixture layer may be sufficiently adhered onto one side surface of a tensile tester using a double-sided tape, the tape attached to the anode current collector may be fastened to the other side surface of the tensile tester, and the adhesive force may be then measured.

The anode 100 for a secondary battery may have a $V_D$ value according to Equation 2 below of less than 35%:

$$[\text{Equation 2}]$$

$$V_D = (T_2 - T_1) / (T_1 - T_0) \times 100$$

in Equation 2, $V_D$ is a volumetric expansion rate (%) of the anode, $T_0$ is a thickness of the anode current collector, $T_1$ is a thickness of the anode before charging the secondary battery (SOC 0), and $T_2$ is a thickness of the anode after charging the secondary battery (SOC 100).

Specifically, the anode 100 for a secondary battery may have a $V_D$ value of 34% or less, 33% or less, 1% or more, or 20% or more, and charging of the secondary battery may be performed under conditions of CC/CV (0.33C, 4.2V) and 0.05C CUT-OFF at room temperature (25°C).

Lithium Secondary Battery

A lithium secondary battery according to an embodiment may include an anode for a secondary battery according to any one of the above-described embodiments.

The lithium secondary battery may include a cathode. The cathode is not particularly limited, and the cathode may include a cathode current collector and a cathode mixture layer disposed on at least one surface of the cathode current collector.

The cathode mixture layer may include a cathode active material. The cathode active material may include a compound capable of reversibly intercalating and deintercalating a lithium ion. For example, the cathode active material may include a lithium-transition metal composite oxide.

Specifically, the lithium-transition metal composite oxide may be an NCM-based cathode active material represented by chemical formula $Li_xNi_aCo_bMn_cO_y$ ($0 < x \leq 1.1$, $2 \leq y \leq 2.02$, $0 < a < 1$, $0 < b < 1$, $0 < c < 1$, $0 < a+b+c \leq 1$). In addition, the lithium-transition metal composite oxide may be a lithium iron phosphate (LFP)-based cathode active material represented by chemical formula $LiFePO_4$.

The lithium secondary battery may have a DC-IR resistance value of 1.05 mΩ or less. Specifically, the lithium secondary battery may have a DC-IR resistance value of 1.03 mΩ or less, 1.01 mΩ or less, 0.95 mΩ or less, 0.92 mΩ or less, or 0.90 mΩ or less, or 0.1 mΩ or more, or 0.8 mΩ or more. The resistance value of the secondary battery may be measured according to Equation 3 below:

$$[\text{Equation 3}]$$
$$R = (V_0 - V_1)/I$$

in Equation 3, R is a resistance value of the secondary battery, $V_0$ is a voltage of the secondary battery measured after setting SOC 50 at 25°C and resting for 1 hour, $V_1$ is a voltage of the secondary battery measured after discharging at 1C current for 10 seconds, and I is a 1C current value.

The lithium secondary battery may have excellent high-capacity characteristics, lifespan characteristics, resistance characteristics, and the like, and thus may be very useful as a power source for electric vehicles (EVs).

Inventive Examples and Comparative Examples

1. Manufacturing of Anode and Secondary Battery

1) Manufacturing of Anode

Anodes for a secondary battery in Inventive Examples 1 to 12 and Comparative Example 1 to 3 including an anode mixture layer were prepared by applying an anode slurry containing a remainder of a carbon-based active material (graphite), a silicon-based active material ($SiO_x$) 10% by weight, a conductive material (a single-walled carbon nanotube; SWCNT) 0.5% by weight, and a binder with a loading weight (LW) of 9 mg/cm$^2$ on an anode current collector (a Cu foil) and drying the same with hot air at 110°C. In this case, types and contents of binders of Inventive Examples 1 to 12 and Comparative Examples 1 to 3 were differently adjusted, as illustrated in Table 1 below.

2) Manufacturing of Secondary Battery

A pouch-type lithium secondary battery was prepared by applying a slurry comprising an NCM-based active material, which was a lithium-transition metal composite oxide, to aluminum foil, drying the same to prepare a cathode, disposing a secondary battery cell prepared by interposing a polyolefin separator between the cathode and the anode, prepared above, in a pouch for a secondary battery, injecting an electrolytic solution injected with 1 m of $LIPF_6$ into a solvent in which ethylene carbonate (EC) and diethyl carbonate (DEC) were mixed, and sealing the same. The prepared pouch-type lithium secondary battery was applied as secondary battery samples of the Inventive Examples and the Comparative Examples.

**2. Evaluation of Anode and Secondary Battery**

1) Adhesive Force of Anode

The anode for a secondary battery prepared as described above was subjected to a 90-degree peel test using a peel tester to measure adhesive force between the anode current collector and the anode mixture layer, and results therefrom are illustrated in Table 1 below. Specifically, after cutting the anode into a size of 18 mm in width and 150 mm in length, a tape having a width of 18 mm was attached to the anode current collector, and a roller having a load of 2 kg was used to ensure sufficient adhesion. Thereafter, the anode mixture layer was adhered to one side surface of a tensile tester (IMADA, DS2-50N) using double-sided tape, and then the adhesive force was measured by fastening the tape attached to the anode current collector to the other side surface of the tensile tester.

2) Volumetric expansion Rate ($V_D$) of Anode

For the secondary battery sample prepared as described above, a thickness (SOC 0, $T_1$) of the anode and a thickness ($T_0$) of the anode current collector, before charging, were measured, respectively. Thereafter, the secondary battery sample was charged (CC/CV 0.1C 0.01V (vs. Li) 0.01C CUT-OFF) at room temperature (25°C) and then disassembled to measure a thickness (SOC 100, $T_2$) of the charged anode, and a volumetric expansion rate ($V_D$) of the anode was calculated by the following Equation 2, and results therefrom are illustrated in Table 1 below.

$$[\text{Equation 2}]$$

$$V_D = (T_2 - T_1) / (T_1 - T_0) \times 100$$

in Equation 2, $V_D$ is a volumetric expansion rate (%) of the anode, $T_0$ is a thickness of the anode current collector, $T_1$ is a thickness of the anode before charging the secondary battery (SOC 0), and $T_2$ is a thickness of the anode after charging the secondary battery (SOC 100).

3) Resistance Characteristics of Battery

The secondary battery sample prepared as described above was set to SOC 50 at room temperature (25°C), rested for 1 hour, and then discharged at 1C current for 10 seconds, to measure resistance characteristics. Results therefrom were illustrated in Table 1 below. Specifically, a resistance value of the secondary battery was measured according to Equation 3 below.

$$[\text{Equation 3}]$$

$$R = (V_0 - V_1)/I$$

in Equation 3, R is a resistance value of the secondary battery, $V_0$ is a voltage of the secondary battery measured after setting SOC 50 at 25°C and resting for 1 hour, $V_1$ is a voltage of the secondary battery measured after discharging at 1C current for 10 seconds, and I is a 1C current value.

[Table 1]

| | Binder | | | | | Adhesive Force (N/ 18mm ) | $V_D$ (%) | DC-IR (mOhm) |
|---|---|---|---|---|---|---|---|---|
| | Type (A + R) | R Characteristics | | Amount (wt%) ($C_A$ + $C_R$) | $R_B$ ($C_A/C_R$) | | | |
| | | Type | Acrylate Amount (mol%) | | | | | |
| Inventive Example 1 | PAA-PVA + SBR | SBR 2 | 10 | 2 + 0.5 | 4 | 0.32 | 34.2 | 1.01 |
| Inventive Example 2 | PAA-PVA + SBR | SBR 3 | 30 | 2 + 0.5 | 4 | 0.31 | 34.3 | 0.95 |
| Inventive Example 3 | PAA-PVA + SBR | SBR 4 | 50 | 2 + 0.5 | 4 | 0.29 | 34.3 | 0.91 |
| Inventive Example 4 | PAA-PVA + SBR | SBR 4 | 50 | 2 + 0.2 | 10 | 0.26 | 34.1 | 0.92 |
| Inventive Example 5 | PAA-PVA + SBR | SBR 4 | 50 | 2 + 0.7 | 2.86 | 0.29 | 34.3 | 0.90 |

(continued)

| | Binder | | | | | Adhesive Force (N/ 18mm ) | V_D (%) | DC-IR (mOhm) |
| | Type (A + R) | R Characteristics | | Amount (wt%) (C_A + C_R) | R_B (C_A/C_R) | | | |
| | | Type | Acrylate Amount (mol%) | | | | | |
| Inventive Example 6 | PAA-PVA + SBR | SBR 4 | 50 | 2 + 1.2 | 1.67 | 0.34 | 34.6 | 0.89 |
| Inventive Example 7 | PAA-PVA + SBR | SBR 4 | 50 | 3 + 0.3 | 10 | 0.25 | 32.6 | 1.05 |
| Inventive Example 8 | PAA-PVA + SBR | SBR 4 | 50 | 3 + 1.5 | 2 | 0.31 | 32.8 | 1.03 |
| Inventive Example 9 | PAA-PVA + SBR | SBR 4 | 50 | 2 + 0.1 | 20 | 0.22 | 34.1 | 1.06 |
| Inventive Example 10 | PAA-PVA + SBR | SBR 4 | 50 | 2 + 1.5 | 1.33 | 0.33 | 36.0 | 0.90 |
| Inventive Example 11 | PAA-PVA + SBR | SBR 4 | 50 | 3 +0.15 | 20 | 0.20 | 32.6 | 1.13 |
| Inventive Example 12 | PAA-PVA + SBR | SBR 4 | 50 | 3 + 2.25 | 1.33 | 0.32 | 34.8 | 1.00 |
| Comparative Example 1 | PAA-PV A | - | - | 2.5 | - | 0.24 | 34.2 | 1.08 |
| Comparative Example 2 | PAA-PVA + SBR | SBR 1 | 4 | 2 + 0.5 | 4 | 0.31 | 34.1 | 1.05 |
| Comparative Example 3 | PAA-PVA + SBR | SBR 5 | 80 | 2 + 0.5 | 4 | 0.26 | 35.6 | 0.90 |

In Table 1, A, R, PAA-PVA, SBR, and the like were respectively as follows:

A: an acrylate-based binder
R: a rubber-based binder
PAA-PVA: a polyacrylic acid-polyvinyl alcohol copolymer
SBR: a styrene-butadiene rubber containing an acrylate-based monomer
SBR 1, 2, 3, 4, 5: SBR in which ratios of acrylate monomers are 4, 10, 30, 50, and 80 mol%, respectively.

Referring to Table 1, an anode of Comparative Example 1 was found to be relatively inferior in resistance characteristics of the battery, due to the presence of only a binder (PAA-PVA) having relatively low affinity with the electrolytic solution, and was also found to have relatively low adhesive force due to absence of a rubber-based binder (SBR).
In addition, even though both an acrylate-based binder and a rubber-based binder were included, when a content of the acrylate-based monomer in the rubber-based binder was excessively small (Comparative Example 2), a DC-IR value was relatively high, indicating that an effect of improving resistance characteristics of the battery was inferior.

It was believed that this was because the rubber-based binder having an excessively small content of the acrylate-based monomer has substantial limitations in improving affinity with the electrolytic solution and an absorption amount (uptake) of the electrolytic solution. In addition, when a content of the acrylate-based monomer in the rubber-based binder was excessively large (Comparative Example 3), adhesive force of the anode was relatively low, and a value for a volumetric expansion rate of the anode was relatively high. It was believed that this was because the rubber-based binder having an excessively large content of the acrylate-based monomer greatly increased an absorption amount (uptake) due to high affinity with the electrolytic solution, thereby increasing a degree of swelling of the anode, and also lowered adhesive force.

Inventive Examples 1 to 12 including both an acrylate-based binder and a rubber-based binder and in which a content of the acrylate-based monomer in the rubber-based binder was appropriately adjusted, were illustrated to have relatively high adhesive force of the anode, a relatively low volumetric expansion rate of anode, and a relatively low DC-IR value, and were then judged that resistance characteristics of the battery was also improved to an excellent level while effectively suppressing volumetric expansion of the silicon-based active material.

Among these, since Inventive Examples 1 to 8, in which a content ratio of the acrylate-based binder and the rubber-based binder ($R_B = C_A/C_R$) was also properly adjusted, had relatively excellent adhesive force, a relatively excellent volumetric expansion rate, and a relatively excellent DC-IR value, Inventive Examples 1 to 8 were considered to provide an anode for a secondary battery and a lithium secondary battery having more excellent performance.

According to an embodiment of the disclosure of this patent document, an anode for a secondary battery and a lithium secondary battery having excellent capacity characteristics may be provided.

According to another embodiment of the disclosure of this patent document, it is possible to provide an anode for a secondary battery and a lithium secondary battery in which volumetric expansion of a silicon-based active material is suppressed during charge/discharge.

According to another embodiment of the disclosure of this patent document, an anode for a secondary battery and a lithium secondary battery having improved battery resistance characteristics may be provided.

According to another embodiment of the disclosure of this patent document, an anode for a secondary battery and a lithium secondary battery having excellent performance such as lifespan characteristics or the like may be provided.

Only specific examples of implementations of certain embodiments may be described. Variations, improvements and enhancements of the disclosed embodiments and other embodiments may be made based on the disclosure of this patent document.

## Claims

1. An anode for a secondary battery comprising:

   an anode current collector and an anode mixture layer disposed on at least one surface of the anode current collector,
   wherein the anode mixture layer includes a silicon-based active material, an acrylate-based binder, and a rubber-based binder,
   wherein the rubber-based binder includes an acrylate-based monomer, and
   wherein a content ratio of the acrylate-based monomer in the rubber-based binder is greater than 4 mol% and less than 80 mol%.

2. The anode of claim 1, wherein the content ratio of the acrylate-based monomer in the rubber-based binder is 10 to 50 mol%.

3. The anode of claim 1 or 2, wherein an $R_B$ value according to Equation 1 below is greater than 1.33 and less than 20:

$$[\text{Equation 1}]$$
$$R_B = C_A/C_R$$

   In Equation 1, $R_B$ is a weight-based content ratio of the acrylate-based binder and the rubber-based binder, $C_A$ is a content (wt%) of the acrylate-based binder in the anode mixture layer, and $C_R$ is a content (wt%) of the rubber-based binder in the anode mixture layer.

4. The anode of claim 3, wherein the $R_B$ value is 1.67 to 10.

5. The anode of any one of claims 1 to 4, wherein the acrylate-based binder comprises polyacrylic acid (PAA), a polyacrylic acid-based copolymer, or a combination thereof,
wherein the polyacrylic acid-based copolymer is a copolymer of polyacrylic acid (PAA) and any one selected from polyacrylamide, polyimide (PI), polyvinyl alcohol (PVA), and combinations thereof.

6. The anode of any one of claims 1 to 5, wherein the rubber-based binder comprises a styrene-butadiene rubber (SBR).

7. The anode of any one of claims 1 to 6, wherein the acrylate-based monomer is any one selected from alkyl acrylate having an alkyl group having 1 to 10 carbon atoms; alkyl methacrylate having an alkyl group of 1 to 10 carbon atoms; and combinations thereof.

8. The anode of any one of claims 1 to 7, wherein the silicon-based active material comprises at least one selected from $SiO_x$ (0 < x < 2), metal-doped $SiO_x$ (0 < x < 2), SiC, and Si.

9. The anode of any one of claims 1 to 8, wherein adhesive force between the anode current collector and the anode mixture layer is 0.25 N/18 mm or more.

10. The anode of any one of claims 1 to 9, wherein a $V_D$ value according to Equation 2 below is less than 35%:

[Equation 2]

$$V_D = (T_2 - T_1) / (T_1 - T_0) \times 100$$

in Equation 2, $V_D$ is a volumetric expansion rate (%) of the anode, $T_0$ is a thickness of the anode current collector, $T_1$ is a thickness of the anode before charging the secondary battery (SOC 0), and $T_2$ is a thickness of the anode after charging the secondary battery (SOC 100).

11. A lithium secondary battery comprising the anode of any one of claims 1 to 10.

12. The lithium secondary battery of claim 11, wherein a DC-IR resistance value is 1.05 m$\Omega$ or less.

100

20

10

# FIG. 1

100

22
20
21

10

# FIG. 2

**EUROPEAN SEARCH REPORT**

Application Number

EP 23 19 5694

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | KR 2019 0029320 A (LG CHEMICAL LTD [KR]) 20 March 2019 (2019-03-20) * example 3 * | 1-12 | INV. H01M4/13 H01M4/134 H01M4/136 H01M4/38 H01M4/48 H01M4/58 H01M4/62 |
| A | CN 112 909 261 A (SVOLT ENERGY TECH CO LTD) 4 June 2021 (2021-06-04) * example 1 * | 1-12 | |
| A | CN 112 909 252 A (EVERGRANDE NEW ENERGY TECH SHENZHEN CO LTD) 4 June 2021 (2021-06-04) * example A1 * | 1-12 | |

TECHNICAL FIELDS SEARCHED (IPC)

H01M

The present search report has been drawn up for all claims

| Place of search | Date of completion of the search | Examiner |
|---|---|---|
| Munich | 7 June 2024 | Meini, Stefano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

14

## ANNEX TO THE EUROPEAN SEARCH REPORT
## ON EUROPEAN PATENT APPLICATION NO.

EP 23 19 5694

This annex lists the patent family members relating to the patent documents cited in the above-mentioned European search report.
The members are as contained in the European Patent Office EDP file on
The European Patent Office is in no way liable for these particulars which are merely given for the purpose of information.

07-06-2024

| Patent document cited in search report | Publication date | Patent family member(s) | Publication date |
|---|---|---|---|
| KR 20190029320 A | 20-03-2019 | NONE | |
| CN 112909261 A | 04-06-2021 | CN 112909261 A | 04-06-2021 |
| | | WO 2022237534 A1 | 17-11-2022 |
| CN 112909252 A | 04-06-2021 | NONE | |

EPO FORM P0459

For more details about this annex : see Official Journal of the European Patent Office, No. 12/82